# EUROPÄISCHE PATENTSCHRIFT

(11) **EP 2 605 954 B1**
(45) Veröffentlichungstag und Bekanntmachung des Hinweises auf die Patenterteilung: **23.07.2014**
(21) Anmeldenummer: 11743832.5
(22) Anmeldetag: 12.08.2011
(51) Int. Cl.: B62K 25/08, B23B 31/30

(54) **VORDERRADGABEL FÜR MOTORRÄDER**
FRONT FORK FOR MOTORCYCLES
FOURCHE AVANT POUR MOTOCCYCLETTE

(30) Priorität: 19.08.2010 DE 102010035770
(43) Veröffentlichungstag der Anmeldung: 26.06.2013
(73) Patentinhaber: Schneider, Ewald, 74214 Schöntal - Bieringen (DE)
(72) Erfinder: Schneider, Ewald, 74214 Schöntal - Bieringen (DE)
(74) Vertreter: Witte, Weller & Partner Patentanwälte mbB
(86) Internationale Anmeldenummer: PCT/EP2011/063951
(87) Internationale Veröffentlichungsnummer: WO 2012/022691

(56) Entgegenhaltungen:
- EP-A1- 2 130 755
- DE-A1-102007 001 440
- DE-U1- 29 614 727

## Beschreibung

Die vorliegende Erfindung betrifft eine Vorderradgabel für Motorräder, mit zumindest zwei Gabelbeinen, wobei jedes Gabelbein als Teleskopstoßdämpfer ausgebildet ist, der ein äußeres und ein inneres Gabelbeinrohr umfasst, das gegen die Kraft einer Feder in das äußere Gabelbeinrohr eintauchbar ist, wobei die äußeren oder inneren Gabelbeinrohre über zumindest eine Gabelbrücke miteinander verbunden sind, an der sie über ein Spannsystem befestigt sind.

Eine derartige Vorderradgabel ist aus der DE 101 61 096 A1 bekannt.

Die bekannte Vorderradgabel ist eine sogenannte Teleskopgabel in klassischer Bauform, bei der Gabelbrücken am Lenkkopf die inneren Gabelbeinrohre aufnehmen, die auch als Standrohre bezeichnet werden. Die inneren Gabelbeinrohre gleiten in den untenliegenden, äußeren Gabelbeinrohren, die auch als Tauchrohre oder Gleitrohre bezeichnet werden.

An ihrem unteren Ende tragen die äußeren Gabelbeinrohre die Radachse und die Bremse.

Derartige Teleskopgabeln bestehen in der Regel aus zwei oder auch zwei mal zwei Gabelbeinen, die oben durch eine oder zwei Gabelbrücken miteinander verbunden sind. Zwischen diesen ist ein kurzes Rohr angebracht, das als Gabelschaft oder Steuerrohr bezeichnet wird. Über das Steuerrohr ist die Vorderradgabel an einem Steuerkopf eines Motorradrahmens befestigt.

In dem äußeren Gabelbeinrohr ist dabei eine Schraubenfeder angeordnet, die die inneren Gabelbeinrohre abstützt. Zur Dämpfung der Bewegung des inneren Gabelbeinrohres in dem äußeren Gabelbeinrohr ist zusätzlich ein Kolben vorgesehen, dessen Bewegung über ein Hydrauliköl bedämpft wird, so dass das Gabelbein insgesamt als Stoßdämpfer wirkt.

Neben der insoweit beschriebenen klassischen Bauform sind auch Vorderradgabeln für Motorräder bekannt, bei denen die Gabelbeine umgekehrt angeordnet sind. Diese Anordnung wird auch Upside-Down-Gabel genannt.

Bei dieser Anordnung liegen die inneren Gabelbeinrohre unten und tragen die Aufnahmen für die Vorderradachse. Die äußeren Gabelbeinrohre liegen dabei oben und sind an der oberen und der unteren Gabelbrücke befestigt.

Auch bei der klassischen Teleskopgabel, bei der die äußeren Gabelbeinrohre unten angeordnet sind, können die Gabelbeinrohre durch eine zusätzliche Gabelbrücke miteinander verbunden sein.

Die insoweit beschriebenen Vorderradgabeln für Motorräder müssen hohe Anforderungen erfüllen, da ihre statischen und dynamischen Eigenschaften eine entscheidende Rolle für die Stabilität des Fahrzeuges nicht nur während der Fahrt sondern auch während der Bremsvorgänge spielen.

Die Vorderradgabel ermöglicht nämlich nicht nur die Lenkung des Motorrades, sie absorbiert und dämpft darüber hinaus Stöße und vertikale Verstellungen des Vorderrades infolge von Unebenheiten auf der Fahrbahn. Darüber hinaus bestimmt sie die Inklination des Fahrzeuges und des Fahrers in den unterschiedlichsten Fahrsituationen. Schließlich muss die Vorderradgabel auch die bei Kurvenfahrten auftretende Querbeschleunigung aufnehmen.

Von besonderer Bedeutung ist dabei die Befestigung der äußeren Gabelbeinrohre an der Gabelbrücke.

In der Regel (siehe z.B. EP 2 130 755 A1) sind an den Gabelbrücken Klemmschellen vorgesehen, in die Gabelholme eingeklemmt werden. Dazu sind an den Klemmschellen tangential verlaufende Klemmschrauben vorgesehen, über die die Klemmschellen um die Gabelholme gespannt werden. Diese Art von Spannsystem führt dazu, dass die äußeren Gabelbeinrohre beim Festklemmen unrund gedrückt werden, was sich nachteilig auf das Federungsverhalten der bekannten Teleskopgabeln auswirkt.

Sofern nämlich das äußere Gabelbeinrohr im Bereich der Gabelbrücke unrund ist, führt dies zu einer Behinderung der Tauchbewegung des inneren Gabelbeinrohres, wodurch das Dämpfungsverhalten des Gabelbeines bzw. der das Gabelbein bildenden Teleskopfeder verändert wird.

Dies führt nicht nur zu ungewünschten Fahreigenschaften, sondern kann auch zu gefährlichen Fahrsituationen führen, wenn nämlich das linke und das rechte Gabelbein nach dem Montieren der Gabelbeinbrücke unterschiedliche Dämpfungseigenschaften aufweist, weil die äußeren Gabelbeinrohre unterschiedlich stark verdrückt wurden.

Um dieses Problem zu beseitigen, schlägt die eingangs erwähnte DE 101 61 096 A1 vor, als Spannsystem eine die äußeren Gabelbeinrohre umgebende Spannhülse zu verwenden, die in eine entsprechende Ausnehmung der Gabelbrücke eingesetzt ist. Der Innendurchmesser dieser Ausnehmung verjüngt sich in Längsrichtung, genauso wie die Spannhülse.

Nachdem das äußere Gabelbeinrohr unter Zwischenlage der Spannhülse in die entsprechende Ausnehmung der Gabelbrücke eingesetzt wurde, wird die Spannhülse über einen Druckring auf die Gabelbrücke aufgeschraubt oder über ein Gewindeteil in der Gabelbrücke verschraubt.

Die Spannhülse weist dabei in Längsrichtung verlaufende Schlitze auf, die es ermöglichen, dass sich die Spannhülse beim Verspannen sowohl an die Ausnehmung in der Gabelbrücke als auch an das Gabelbeinrohr anpassen kann.

Diese Art der Befestigung soll dafür sorgen, dass das Gabelbeinrohr trotz guter Festlegung nicht unrund wird.

Allerdings sorgen die Schlitze in der Spannhülse dennoch dafür, dass umfänglich verteilt leicht unterschiedliche Kräfte auf das äußere Gabelbeinrohr ausgeübt werden, so dass die eingangs geschilderten Nachteile im Zusammenhang mit dem Unrunddrücken des äußeren Gabelbeinrohres nicht ganz vermieden werden können.

Eine weitere Verbindung für ineinander schiebbare Rohre, die insbesondere für die Höhenverstellung eines in eine Fahrradgabel eingesteckten Lenkers vorgesehen ist, verwendet eine auf das Außenrohr aufschraubbare Mutter. Über diese Mutter wird ein Klemmring auf die Stirnseite des Außenrohres gedrückt, der sich dabei nach innen drückt und in Anlage mit dem Innenrohr gelangt.

Bei axialem und radialem Zusammenpressen dieses Klemmringes zwischen dem inneren Rohr, der Stirnfläche des äußeren Rohres sowie der Überwurfmutter wird somit das Innenrohr sowohl in axialer als auch in umfänglicher Richtung an dem Außenrohr festgelegt.

Diese Art der Verbindung der beiden Rohre ist jedoch wie das aus der DE 101 61 096A bekannte Spannsystem nicht geeignet, die hohen Kräfte aufzunehmen, wie sie bei der Verbindung von Gabelbeinen mit Gabelbrücken an Vorderradgabeln von Motorrädern auftreten.

Weitere Beispiele für den Aufbau einer Vorderradgabel für ein Motorrad sind in der EP 0 507 088 A1 sowie der DE 32 42 830 A1 bekannt, wobei aus der letzteren auch der innere Aufbau eines Teleskopstoßdämpfers erkennbar ist.

Die DE 10 2007 001 440 A1 schlägt vor, eine hydraulische Klemmvorrichtung zu verwenden, um eine Sattelstütze in einem Sattelrohr eines Fahrrades wahlweise über eine Fernbedienung zu verklemmen.

In dem Sattelrohr befindet sich eine Gasfeder, die das Sattelrohr abstützt, wobei das Sattelrohr nach Lösen der Klemmvorrichtung durch die Gasfeder nach oben und gegen den Druck der Gasfeder nach unten bewegt werden kann.

Vor diesem Hintergrund liegt der vorliegenden Erfindung die Aufgabe zugrunde, eine Vorderradgabel der eingangs genannten Art zu schaffen, bei der das Dämpfungsverhalten der Gabelbeinrohre nicht durch die Art der Befestigung der Gabelbeinrohre an den Gabelbrücken beeinträchtigt wird.

Erfindungsgemäß wird diese Aufgabe bei der eingangs erwähnten Vorderradgabel dadurch gelöst, dass das Spannsystem ein hydraulisch betätigtes Spannfutter umfasst.

Derartige, hydraulisch betätigte Spannfutter werden heutzutage vielfach im Maschinenbaubereich eingesetzt, um eine Vorrichtung auf Werkstücktischen zu verspannen, wie es die DE 195 25 574 C1 beschreibt, oder aber um Werkzeuge in Werkzeughalter vom HSK- oder SK-Typ einzuspannen, wie es die WO 2005/097383 A1 beschreibt.

Diese hydraulisch betätigbaren Spannfutter werden auch als Hydraulik-Dehnspannfutter, als Hydro-Dehnspannfutter oder als mediumsbetätigte Dehnspannfutter bezeichnet.

Gemeinsam ist diesen Systemen eine innere, dünnwandige Dehnbuchse, die in Anlage mit dem zu spannenden Rundteil gelangt. Diese Dehnbuchse ist von einer Druckkammer umgeben, die mit einem Druckmedium, z.B. einem Öl, angefüllt ist.

Die Dehnbuchse wird von einem Gehäuse umgeben, mit dem sie derart verbunden ist, dass die Druckkammer nach außen abgedichtet ist.

In die Druckkammer führt ein Spannelement hinein, über das der Druck in der Druckkammer erhöht werden kann.

Durch diese Erhöhung des Druckes legt sich die Dehnbuchse an den eingeführten, zylindrischen Körper an und fixiert diesen sowohl in axialer als auch in umfänglicher Richtung.

Kommerziell sind derartige Hydro-Dehnspannfutter beispielsweise über die Firma Schunk GmbH & Co. KG, 74348 Lauffen/Neckar erhältlich. In der zuvor erwähnten WO 2005/097383 A1 sind verschiedene Konstruktionen für Hydraulik-Dehnspannfutter beschrieben.

Weitere Beispiele für bekannte hydraulisch betätigte Spannsysteme sind aus der DE 195 31 211 A1, der DE 199 47 941 A1 und der DE 296 14 727 U1 bekannt.

Wegen der Konstruktion derartiger Hydro-Spannsysteme wird umfänglich auf den soweit zitierten Stand der Technik sowie die darin angegebenen Zitatstellen verwiesen.

Diese hydraulisch betätigten Spannfutter werden nun erfindungsgemäß dazu verwendet, das äußere und/oder das innere Gabelbeinrohr einer Vorderradgabel an der Gabelbrücke zu befestigen.

Der Erfinder der vorliegenden Anmeldung hat nämlich erkannt, dass ein Hydro-Spannsystem gegenüber den bekannten Spannsystemen, die bisher bei Vorderradgabeln für Motorräder verwendet werden, den Vorteil aufweist, dass das eingespannte Gabelbeinrohr nicht unrund gedrückt werden kann, da durch das Betätigungsmedium in der Druckkammer auf die Druckhülse von allen Seiten radial gleichmäßige Kraft auf das Gabelbeinrohr ausgeübt wird.

Ein weiterer Vorteil bei der Verwendung eines Hydro-Spannfutters besteht darin, dass die Einstellung extrem einfach ist, es muss nämlich lediglich eine Spannschraube in das Spannfutter hineingedreht werden, wodurch ein Kolben verschoben wird, der den Druck in der Druckkammer erhöht. Weil das in der Druckkammer enthaltene Medium nahezu inkompressibel ist, führt diese Druckerhöhung dazu, dass die Druckbuchse sich radial vollflächig nach innen bewegt und an das Gabelbeinrohr anpresst.

Durch feinfühliges Verstellen dieser Spannschraube lässt sich die Kraft umfänglich auf das Gabelbeinrohr genau einstellen, so dass einerseits für einen sicheren Halt in axialer und umfänglicher Richtung des Gabelbeinrohres an der Gabelbrücke gesorgt wird, andererseits aber ein zu starkes Zusammenpressen verhindert werden kann.

Darüber hinaus treten auch die eingangs erwähnten Unterschiede beim Einspannen des linken und des rechten Gabelbeinrohres nicht mehr auf, weil zum einen das Spannen mit dem Hydro-Spannfutter nicht dazu führt, dass das Gabelbeinrohr unrund gedrückt wird, und zum anderen die Kraft genau eingestellt werden kann.

Dabei ist vorgesehen, dass nicht nur die äußeren, sondern zusätzlich oder stattdessen auch die inneren Gabelbeinrohre über ein hydraulisch betätigtes Spannfutter an der zugeordneten Gabelbrücke befestigt werden. Der Erfinder hat nämlich erkannt, dass auch die inneren Gabelbeinrohre durch im Stand der Technik verwendeten Spannsysteme unrund gedrückt werden, was ebenfalls dazu führt, dass die Tauchbewegung der inneren Gabelbeinrohre in den äußeren behindert wird.

Wie bereits geschildert, werden im Stand der Technik Hydro-Spannsysteme bisher im Wesentlichen dazu verwendet, Werkzeuge an Werkzeughaltern zu befestigen, sie dienen also dazu, massive Rundstäbe aufzunehmen und zu spannen.

Vor diesem Hintergrund war es nicht zu erwarten, dass ein Hydro-Spannsystem auch verwendet werden kann, um Gabelbeinrohre von Teleskopdämpfern zu spannen, ohne dass diese im Bereich der Spannflächen unzulässig zusammengedrückt werden.

Der Erfinder der vorliegenden Anmeldung hat jedoch erkannt, dass die Gabelbeinrohre derart steif und stabil sind, dass sie bei gleichmäßigem radialem Druck von außen eine statisch und dynamisch mehr als ausreichende Spannung über Hydro-Spannfutter zulassen, obwohl sie bei ungleichmäßigem radialem Druck von außen sehr schnell dazu neigen, unrund zu werden.

Das Spannfutter kann dabei geeignet an der Gabelbrücke befestigt werden, bspw. durch Verschrauben, Verklemmen oder Verschweißen. Es ist auch möglich, die Spannfutter in die Gabelbrücke zu integrieren.

Vor diesem Hintergrund betrifft die vorliegende Erfindung auch die Verwendung eines Hydro-Spannsystems zur Befestigung eines Gabelbeinrohres einer Motorradgabel an einer Gabelbrücke.

Außer den hydraulisch betätigten Spannfuttern sind auch sogenannte Druckhülsen bekannt, wie sie beispielsweise von der Firma Spieth-Maschinenelemente, 73730 Esslingen vertrieben werden.

Bei diesen Druckhülsen wird eine Innenhülse gegenüber einer Außenhülse in axialer Richtung zusammengedrückt, wodurch die Innenhülse sich radial nach innen bewegt und eine aufgenommene Welle verspannt.

Das axiale Zusammendrücken der Innenhülse erfolgt über umfänglich verteilte Spannschrauben. Damit die aufgenommene Welle gleichmäßig eingespannt wird, müssen die Spannschrauben über Kreuz und sukzessive angezogen werden, was zum einen sehr langwierig ist, zum anderen aber einen Unsicherheitsfaktor darstellt.

Derartige, mechanisch betätigte Druckhülsen sind daher für den Einsatz an Vorderradgabeln von Motorrädern nicht geeignet, da auch sie dazu führen, dass die Gabelbeinrohre unrund gedrückt werden können.

Unter "hydraulisch betätigtes Spannfutter" wird im Rahmen der vorliegenden Erfindung ein Spannfutter verstanden, das eine dünnwandige innere Dehnhülse sowie ein äußeres Gehäuses umfasst, wobei Dehnhülse und Gehäuse zwischen sich eine nach außen abgeschlossene Druckkammer begrenzen, in der ein (vorzugsweise) inkompressibles Medium wie beispielsweise Hydrauliköl vorhanden ist, auf das Druck ausgeübt werden kann, um die Dehnhülse auf ein aufgenommenes Rundteil aufzudrücken.

In die Druckkammer führt in einer bekannten Ausführung eine Bohrung hinein, in der ein über eine von außen zugängliche Spannschraube betätigter Kolben sitzt, der beim Hineindrehen der Spannschraube in die Bohrung den Druck in der Druckkammer erhöht und dadurch dafür sorgt, dass sich die Dehnhülse an ein aufgenommenes Rohr oder einen aufgenommenen Schaft anlegt und diesen verspannt.

Die der Erfindung zugrunde liegende Aufgabe wird auf diese Weise vollkommen gelöst.

Die Vorderradgabel kann dabei zwei Gabelbrücken aufweisen, an denen die äußeren oder inneren Gabelbeinrohre festgelegt sind, wobei zumindest die untere Gabelbeinbrücke über ein hydraulisch betätigtes Spannfutter verfügt, um die Gabelbeinrohre einzuspannen.

Hier ist von Vorteil, dass die Spannsysteme nur dort verwendet werden, wo eine Unrundheit des äußeren oder inneren Gabelbeinrohres zu einer Beeinträchtigung des Eintauchens des inneren Gabelbeinrohres führen kann.

Andererseits ist es bevorzugt, wenn an beiden Gabelbrücken erfindungsgemäß verwendete hydraulisch betätigte Spannfutter vorgesehen sind.

In an sich bekannter Weise kann an der Gabelbrücke ein Steuerrohr angeordnet sein, über das die Vorderradgabel an einem Steuerkopf eines Motorradrahmens befestigt wird.

Das äußere Gabelbein kann dabei jeweils als Standrohr ausgebildet sein, so dass die Vorderradgabel als Upside-Down-Gabel ausgebildet ist.

Andererseits ist es auch möglich, das äußere Gabelbein als Gleitrohr auszubilden, so dass die Vorderradgabel den klassischen Aufbau aufweist.

Insbesondere bei dem klassischen Aufbau sind die äußeren Gabelbeinrohre häufig über eine Gabelbrücke miteinander verbunden, während die inneren, hier oben liegenden Gabelbeinrohre über zwei Gabelbrücken miteinander verbunden sind.

Grade hier kann die unten liegende Gabelbrücke die äußeren Gabelbeinrohre während der Montage stark verformen, was besonders nachteilig für das Dämpfungsverhalten der Teleskopstoßdämpfer ist. Aber auch die inneren Gabelbeinrohre können verformt werden, wenn sie an den beiden oberen Gabelbrücken montiert werden.

Auch hier ist also die Verwendung von Hydro-Spannfuttern von Vorteil.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine schematische Vorderansicht der neuen Vorderradgabel;
- Fig. 2: eine Draufsicht auf die obere Gabelbrücke der Vorderradgabel aus Fig. 1; und
- Fig. 3: eine schematische Schnittdarstellung durch ein Hydro-Spannfutter, wie es bei der Vorderradgabel aus Fig. 1 verwendet wird.

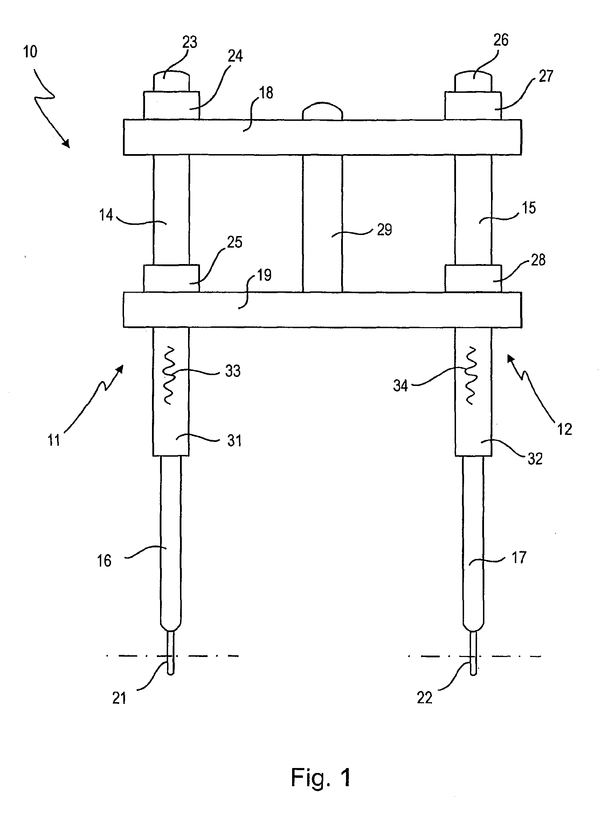

In Fig. 1 ist mit 10 schematisch und nicht maßstabsgetreu eine Vorderradgabel für Motorräder gezeigt, die nach dem Upside-Down-Konstruktionsprinzip aufgebaut ist.

Die Vorderradgabel 10 umfasst ein linkes Gabelbein 11 sowie ein rechtes Gabelbein 12. Beide Gabelbeine 11 und 12 sind als Teleskopstoßdämpfer ausgebildet und weisen ein oberes, äußeres Gabelbeinrohr 14 bzw. 15 sowie ein unteres, inneres Gabelbeinrohr 16 bzw. 17 auf.

Die oberen Gabelbeinrohre 15 und 16 sind durch eine obere Gabelbrücke 18 sowie eine untere Gabelbrücke 19 miteinander verbunden.

An ihrem unteren Ende sind an den inneren Gabelbeinrohren 16 und 17 Augen 21 bzw. 22 vorgesehen, die zur Aufnahme einer Vorderradachse dienen.

Das äußere Gabelbeinrohr 14 des linken Gabelbeines 11 ist an seinem oberen Ende 23 über ein hydraulisch betätigtes Spannfutter 24 an der Gabelbrücke 18 und über ein weiteres hydraulisch betätigtes Spannfutter 25 an der Gabelbrücke 19 befestigt.

In vergleichbarer Weise ist das äußere Gabelbeinrohr 15 des rechten Gabelbeines 12 an seinem oberen Ende 26 über ein hydraulisch betätigtes Spannfutter 27 an der oberen Gabelbrücke 18 und über ein hydraulisch betätigtes Spannfutter 28 an der unteren Gabelbrücke 19 befestigt.

Die Spannfutter 24, 25, 27, 28 sind an die Gabelbrücke angeschraubt, wobei die Verschraubung in Fig. 1 nicht dargestellt ist.

Zwischen den Gabelbeinen 11 und 12 und in der Sicht der Fig. 1 hinter ihnen ist an den Gabelbrücken 18 und 19 noch ein Steuerrohr 29 befestigt, über das die Vorderradgabel 10 in an sich bekannter Weise an einem Steuerkopf eines Motorradrahmens befestigt wird.

An ihren unteren Enden 31 bzw. 32 steckt in den äußeren Gabelbeinrohren 14 bzw. 15 das innere Gabelbeinrohr 16 bzw. 17, das bei Kraftausübung in axialer Richtung in das entsprechende äußere Gabelbeinrohr 14 bzw. 15 eintaucht.

Mit anderen Worten, die inneren Gabelbeinrohre 16 und 17 tauchen gegen die Kraft von schematisch dargestellten Druckfedern 33, 34 in die äußeren Gabelbeinrohre 14, 15 ein.

Diese Eintauchbewegung wird in bekannter Weise durch die Druckfeder 33, 34 abgefedert und durch ein Kolben-Zylindersystem, das mit Hydrauliköl gefüllt ist, bedämpft. Auf diese Weise wirken die Gabelbeine 11 und 12 als Teleskopstoßdämpfer, wie sie an sich aus dem Stand der Technik bekannt sind.

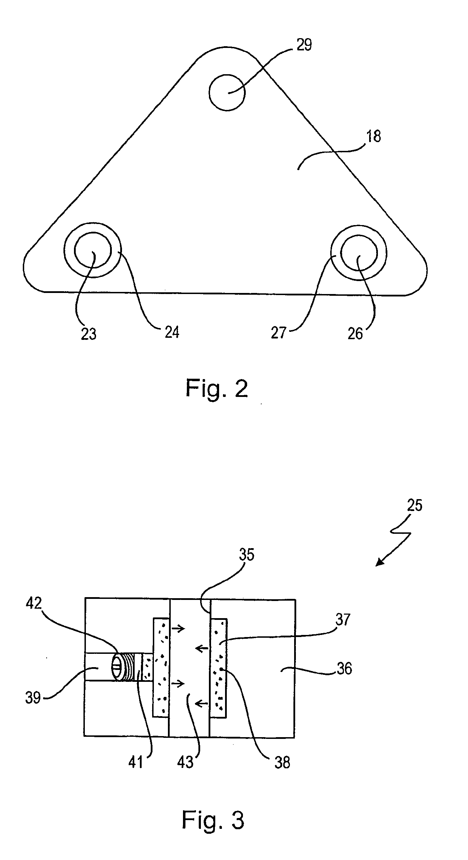

Die Fig. 2 zeigt eine Draufsicht auf die Vorderradgabel 10 aus Fig. 1 von oben, so dass nur die obere Gabelbrücke 18 zu erkennen ist, aus der das Steuerrohr 29 sowie die oberen Enden 23 und 26 der äußeren Gabelbeinrohre 14 und 15 herausragen. Ferner sind von oben die hydraulisch betätigten Spannfutter 24 und 27 zu sehen.

In Fig. 3 ist in schematischer Weise ein Spannfutter der in den Fig. 1 und 2 verwendeten Art im Längsschnitt gezeigt, wobei der Aufbau lediglich schematisch angedeutet ist.

Das Spannfutter 25 in Fig. 3 weist eine innere Dehnhülse 35 auf, durch die das äußere Gabelbeinrohr 14 verläuft.

Die Dehnhülse 35 ist von einem Gehäuse 36 umgeben, wobei Dehnhülse 35 und Gehäuse 36 zwischen sich eine umfängliche Druckkammer 37 begrenzen, die nach außen abgeschlossen ist und ein inkompressibles Fluid 38 enthält, beispielsweise ein Hydrauliköl.

Die Druckkammer 37 ist über eine Gewindebohrung 39 von außen zugänglich, in der ein Druckkolben 41 steckt, der die Druckkammer 37 nach außen abdichtet.

Auf dem Druckkolben 41 sitzt in der Gewindebohrung 39 eine Madenschraube 42, über die der Druckkolben 41 verstellt werden kann.

Wird die Madenschraube 42 weiter in die Gewindebohrung 39 hineingedrückt, so bewegt sie den Druckkolben 41 in Fig. 3 nach rechts, was zu einer Erhöhung des Druckes in der Druckkammer 37 führt. Dieser Druck ist umfänglich gleich verteilt und führt dazu, dass sich die Dehnhülse 35 in Richtung der Pfeile 43 radial gleichmäßig über ihren Umfang und ihre Länge verteilt nach innen bewegt.

Durch diese radiale Bewegung der Spannbuchse 35 wird das äußere Gabelbeinrohr 14 eingeklemmt.

## Patentansprüche

1. Vorderradgabel für Motorräder, mit zumindest zwei Gabelbeinen (11, 12), wobei jedes Gabelbein (11, 12) als Teleskopstoßdämpfer ausgebildet ist, der ein äußeres und ein inneres Gabelbeinrohr (14, 15; 16, 17) umfasst, das gegen die Kraft einer Feder (33,34) in das äußere Gabelbeinrohr (14, 15) eintauchbar ist, wobei die äußeren (14, 15) oder die inneren Gabelbeinrohre über zumindest eine Gabelbrücke (18, 19) miteinander verbunden sind, an der sie über ein Spannsystem (24, 25, 27, 28) befestigt sind,
**dadurch gekennzeichnet, dass** das Spannsystem (24, 25, 27, 28) ein hydraulisch betätigtes Spannfutter (24, 25, 27, 28) umfasst.

2. Vorderradgabel nach Anspruch 1, **dadurch gekennzeichnet, dass** sie zwei Gabelbrücken (18, 19) umfasst, wobei die äußeren Gabelbeinrohre (14, 15) oder die inneren Gabelbeinrohre zumindest an einer der beiden Gabelbrücken (18, 19) über hydraulisch betätigte Spannfutter (24, 25, 27, 28) befestigt sind.

3. Vorderradgabel nach Anspruch 1 oder 2, **dadurch gekennzeichnet, dass** an der Gabelbrücke (18, 19) ein Steuerrohr (29) angeordnet ist.

4. Vorderradgabel nach einem der Ansprüche 1 bis 3, **dadurch gekennzeichnet, dass** das äußere Gabelbeinrohr (14, 15) als Standrohr ausgebildet ist.

5. Vorderradgabel nach einem der Ansprüche 1 bis 3, **dadurch gekennzeichnet, dass** das äußere Gabelbein als Gleitrohr ausgebildet ist.

6. Verwendung eines Hydro-Spannsystems zur Befestigung eines Gabelbeinrohres (14, 15) einer Motorradgabel (10) an einer Gabelbrücke (18, 19).

## Claims

1. Front wheel fork for motorcylces, having at lest two fork legs (11, 12), wherein each fork leg (11, 12) is embodied as a telescopic shock absorber having an outer and an inner fork leg tube (14, 15; 16, 17), said inner fork leg tube being slidable into said outer fork leg tube (14, 15) against the force of spring (33, 34), wherein the outer (14, 15) or the inner fork leg tubes are connected to each other by means of at least one fork link (18, 19), to which fork link they are fixed by means of a clamping system (24, 25, 27, 28),
**characterized in that** the clamping system (24, 25, 27, 28) comprises a hydraulically actuated clamping chuck (24, 25, 27, 28).

2. Front wheel fork according to claim 1, **characterized in that** it comprises two fork links (18, 19), wherein the outer fork leg tubes (14, 15) or the inner fork leg tubes are fixed at least to one of said two fork links (18, 19) by hydraulically actuated clamping chuck (24, 25, 27, 28).

3. Front wheel fork according to claim 1 or claim 2, **characterized in that** a steering tube (29) is connected to the fork link (18, 19).

4. Front wheel fork according to anyone of claims 1 to 3, **characterized in that** the outer fork leg tube (14, 15) is embodied as a vertical pipe.

5. Front wheel fork according to anyone of claims 1 to 3, **characterized in that** the outer fork leg tube (14, 15) is embodied as a sliding pipe.

6. Use of a hydraulic clamping system for fixing a fork leg tube (14, 15) of a motorcycle wheel fork (10) to a fork link (18, 19).

## Revendications

1. Fourche avant pour motocyclettes, avec au moins deux bras de fourche (11, 12), chaque bras de fourche (11, 12) étant réalisé comme un amortisseur télescopique qui comporte un tube de bras de fourche extérieur et un tube de bras de fourche intérieur (14, 15 ; 16, 17) qui peut être enfoncé contre la force d'un ressort (33, 34) dans le tube de bras de fourche extérieur (14, 15), les tubes de bras de fourche extérieurs (14, 15) ou les tubes de bras de fourche intérieurs étant reliés entre eux par au moins un pont de fourche (18, 19), sur lequel les tubes de bras de fourche extérieurs ou les tubes de bras de fourche intérieurs sont fixés par un système de serrage (24, 25, 27, 28),
**caractérisée en ce que** le système de serrage (24, 25, 27, 28) comporte un mandrin de serrage (24, 25, 27, 28) actionné par voie hydraulique.

2. Fourche avant selon la revendication 1, **caractérisée en ce qu'**elle comporte deux ponts de fourche (18, 19), les tubes de bras de fourche extérieurs (14, 15) ou les tubes de bras de fourche intérieurs étant fixés au moins sur l'un des deux ponts de fourche (18, 19) par des mandrins de serrage (24, 25, 27, 28) actionnés par voie hydraulique.

3. Fourche avant selon la revendication 1 ou 2, **caractérisée en ce qu'**un tube de direction (29) est disposé sur le pont de fourche (18, 19).

4. Fourche avant selon l'une quelconque des revendications 1 à 3, **caractérisée en ce que** le tube de bras de fourche extérieur (14, 15) est réalisé comme un tube vertical.

5. Fourche avant selon l'une quelconque des revendications 1 à 3, **caractérisée en ce que** le bras de fourche extérieur est réalisé comme un tube coulissant.

6. Utilisation d'un système de serrage hydraulique pour la fixation d'un tube de bras de fourche (14, 15) d'une fourche pour motocyclettes (10) sur un pont de fourche (18, 19).
